# EUROPEAN PATENT APPLICATION

(11) **EP 4 235 040 A1**
(43) Date of publication of application: **30.08.2023**
(21) Application number: 23157618.2
(22) Date of filing: 20.02.2023
(51) Int. Cl.: F24D 9/00, F24D 19/10

(54) **A TEMPERATURE MANAGEMENT SYSTEM**

(30) Priority: 25.02.2022 GB 202202596
(71) Applicant: Passiv UK Limited, Bury St Edmunds, Suffolk IP30 9UP (GB)
(72) Inventor: CARTER, Edwin, Bury St Edmunds, IP30 9UP (GB); COOPER, Tim, Bury St Edmunds, IP30 9UP (GB); ROSE, Ian, Bury St Edmunds, IP30 9UP (GB); ARNOLD, Cliff, Bury St Edmunds, IP30 9UP (GB)
(74) Representative: Forresters IP LLP

(57) **Abstract**

With reference to Figure 1, we provide a controller for a temperature management system for a property, of the type that includes a first heating system, and a second heating system, each of the first and second heating systems providing different respective heating mechanisms, wherein the controller is configured to: access a first heating model associated with the first heating system, and access a second heating model associated with a second heating system, the first heating model being different to the second heating model and each associating the amount of energy or fuel used by the respective heating system with a respective effect on a temperature of the property, determine a control strategy for controlling the first and second heating systems over a control period, using the first and second heating models, and control operation of the first and second heating systems according to the determined control strategy.

## Description

### Description of Invention

This invention relates to a temperature management system, to a controller for operating a temperature management system and to methods of installing and operating a temperature management system.

Decarbonising heat remains a key challenge for the energy supply industry worldwide. The majority of domestic heating and hot water demand is provided by gas boilers, which typically use fossil fuels.

Historically, properties have been heated using traditional heating systems which provide a circulation system and a boiler which combusts fossil-fuels such as natural gas, oil or Liquefied Petroleum Gas (LPG). WO2013/171448 describes a method of minimising the energy consumption at a property using known heating systems, minimising a "discomfort cost" to occupants (e.g. minimising a divergence between temperatures within a property and user-defined temperature targets).

Heat pumps are systems that pump or otherwise transfer heat within a system, heating or cooling a property using heat extracted from a natural source. A typical heat pump system uses an evaporator to extract heat from a natural heat source (types include ground, air, or water, as explained below), by passing a refrigerant through a heat exchanger so that heat from the natural source causes evaporation and associated expansion of the refrigerant, changing it from liquid to gas form. A pump / compressor is used to pressurise the refrigerant fluid in its gaseous form, raising its temperature further. The heat from the refrigerant is transferred to its associated property as it cools, via radiators / underfloor heating and/or a hot water storage unit, for example.

The cooled refrigerant condenses in a second heat exchanger. This further cooling may also transfer heat to cold water within a central heating system, or another source within the property, for example. The refrigerant passes through an expansion valve, returning to its liquid state, before starting the process again.

Compressing and pumping the fluid uses less electricity, relatively, compared to using standard electrical heating systems, for example. When the outdoor temperature is high and cooling is required within the property, the cycle can be reversed so that the heat pump acts to cool the property (similar to an air conditioner, for example).

Heat pumps of different types are known, including ground source pumps in which the natural heating of the refrigerant takes place underground so as to extract natural heat from the ground, and air source pumps in which the refrigerant extracts heat from the air which is pulled into the system via an impeller, drawing the air flow across a heat exchanger. Water heat pumps are also known, in which heat is drawn from a water source.

A heat pump, which can be electrically powered, may replace a gas boiler at a property. In this way the property can be provided with a heating system, and/or hot water source, at much lower carbon cost. However, wide scale adoption of heat pumps would be problematic due to the additional demands placed on the electricity grid at period of peak demand. Furthermore, heat pumps can be relatively expensive to install. For example, they usually require upgraded radiators and an adapted hot water tank.

The present invention seeks to reduce or overcome one or more of the deficiencies associated with the prior art.

Aspects of the invention are set out in the appended set of claims.

In particular, according to first aspect, we provide a controller for a temperature management system for a property, of the type that includes a first heating system, and a second heating system, each of the first and second heating systems providing different respective heating mechanisms, wherein the controller is configured to:
access a first heating model associated with the first heating system, and
access a second heating model associated with a second heating system, the first heating model being different to the second heating model and each associating the amount of energy or fuel used by the respective heating system with a respective effect on a temperature of the property,
determine a control strategy for controlling the first and second heating systems over a control period, using the first and second heating models, and
control operation of the first and second heating systems according to the determined control strategy.

The control strategy may be determined by minimising a function of:
a first detriment value determined based on a tolerance parameter associating a detriment with a divergence from a stored temperature target, and
a second detriment value determined based on a penalty parameter associating a detriment with the amount of fuel or energy used by each respective heating system.

The tolerance parameter may include stored temperature targets providing one or more target temperatures or target temperature ranges associated with one or more portions of the control period.

The detriment associated with divergence from the stored temperature targets may vary over time.

The penalty parameter may associate use of fuel or energy to detriment values that vary over different portions of the control period.

The controller may be operable to determine the respective expected effects on temperature of using each of the first and second heating systems during a future portion of the control period, in order to determine an expected divergence from the stored temperature targets associated with use of each system, and an expected usage of fuel and/or energy by each system, in determining a control strategy.

Determining the control strategy for controlling the first and second heating systems may be based at least in part on one or more of the following heat management parameters:
a heat capacity and thermal transfer properties of the respective heating systems;
a heat capacity and thermal transfer properties of the thermal mass of the property;
thermal transfer properties between the property and an external environment;
forecast temperatures of the external environment over the control period.

The controller may be operable to determine a control schedule for controlling the first and second heating systems over one or more future portions of the control period.

The determination minimising the function of the tolerance parameter and the penalty parameter may be made iteratively, as the models of the expected effect on temperature of using each of the first and second heating system are updated, so as to update the control schedule.

The controller may be operable to receive data from one or more sensors associated with the property, and to control operation of the first and second heating systems by communicating control signals to the respective first and second heating systems.

The first heating system may provide a boiler, and the controller may be communicatively connected to a boiler enable switch disposed in series between an output of a zone valve control actuator, and a control input of the boiler.

The controller may be configured, in response to receiving of an input from the zone control valve actuator indicating that a zone control valve is open, to cause the boiler enable switch to operate the boiler only where it is determined that the first heating system should be used, and not to do so where it is determined that the second heating system should instead be used.

According to a second aspect of the invention, we provide a temperature management system for controlling a temperature at a property, the system including:
a first heating system and a second heating system;
each of the first and second heating systems providing different respective heating mechanisms; and
a controller of the first aspect of the invention.

The first heating system may comprise a boiler and the second heating system may comprise a heat pump.

At least a portion of the controller may be located remote from the property.

Embodiments of the technology will now be described, by way of example only, with reference to the following figures, of which:
Figure 1 is a diagrammatic representation of a hybrid temperature management system according to embodiments of the technology;
Figures 2 and 3 are flow diagrams illustrating method steps of controlling a hybrid temperature management system,

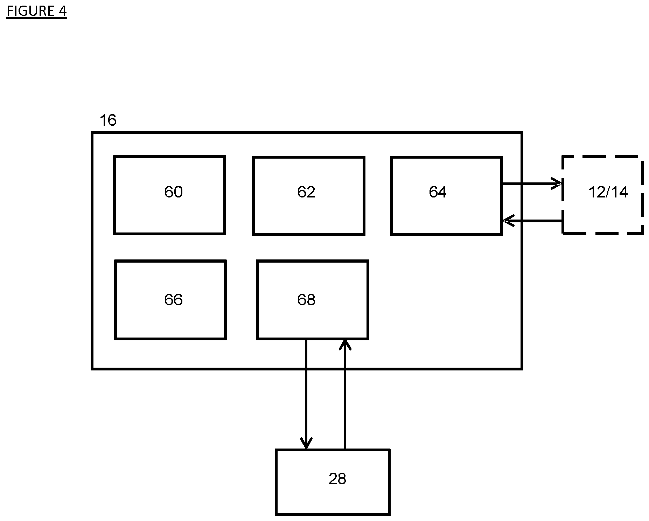

Figure 4 is a diagrammatic representation of a controller according to aspects of the described technology, and
Figure 5 is a diagrammatic representation of hardware components within a heating system for controlling operation of a boiler.

We describe a hybrid temperature management system, in which a property is provided both with two different heating systems. For example, a property may be provided with both a heat pump system and with a traditional heating system incorporating a boiler (a 'combi' or system type boiler, using fuel such as gas, oil or LPG, for example).

By providing both a traditional boiler and a heat pump, many of the potential drawbacks associated with heat pump use may be addressed. In this way, low carbon heat is provided by the heat pump for most of the year, but the boiler (for example) of the traditional heating system can be relied upon when a heat pump is unsuitable. Such circumstances may include when the electricity grid is at or near to full capacity, or when the heat demand of the property is higher than normal (e.g. in cold weather), and where there is a desire to heat a property very rapidly. In this way the gas network (or local oil or LPG storage) provides a solution to the energy storage and transmission challenge for renewable generation. This is particularly the case at present, where many (most) properties are heated using a traditional system including a boiler, to which a heat pump may be added at the property, to complement the existing traditional system(s).

It should be understood that various combinations of heating systems are envisaged, and that the combination of a boiler and a heat pump is one that is described in more detail, as it provides a suitable example. An important aspect is that the first and second heating systems provide different respective heating mechanisms. By different heating mechanisms, we mean that the two systems use different fuel sources and/or provide different sources of heating. For example, each of the heating systems may be a different one of the following: a hot water heating system using a gas, oil, or electric boiler, an electric heating system using underfloor electric heaters (such as radiators, underfloor heating, or both), a district heating system in which an external heat generator provides a building with a source of hot water, a heat pump, a warm air circulation system, and/or a storage heating system. This list is not intended to be exhaustive, but merely provides examples of systems that may be used in this context. In that way, the temperature management system of the current invention can determine a preferred control strategy, optimising the use of resources in order to achieve desired heating targets within the property.

Providing a hybrid temperature management system of this type enables a property to be heated in both an efficient way, and an environmentally friendly way, so that use is made of expendable fuel only when needed in circumstances in which a heat pump alone provides an insufficient response. In this way the invention should be understood to provide great environmental benefit over use of traditional temperature management systems.

When providing a hybrid temperature management system of this type, a challenge is how to control the heating systems. For example, a system controlling the heat pump and the boiler must select which to run at any point in time. There are many variables that influence this choice, such as the relative availability of energy sources - for powering the heat pump, and/or a fuel source for powering the boiler. A non-exhaustive list of factors that may be considered is as follows:
- The detrimental impact of the use of electricity and/or fuel may also vary over time (i.e. using electricity or fuel at peak times may put excess strain on a power or fuel network);
- The current weather conditions may impact the performance of the heat pump;
- The thermal properties of the property (insulation, radiator size, details of the underfloor heating systems) which may affect the performance of the traditional and/or heat pump systems;
- The immediate and medium term comfort requirements of the inhabitants of the property (provided in the form of user input temperature targets, as explained below).

In relation to the detrimental impact of using power or fuel at particular times, there is the status of the local and national electricity grid to take into account, to ensure for example that substations are not overloaded. Furthermore, there is a desire for maximal use to be made of low-carbon electricity generation at a national scale, for its environmental benefits.

By comfort requirements of the inhabitants of the property, we generally mean that the occupants of a property typically set desired temperature levels to be achieved within the property. This is typically stored as a set point series over time, such that heating is provided to meet and maintain the property - or zones within a property - at around those temperatures. We refer to such user-defined settings for temperature control as temperature targets. Typically, in this context a temperature target defines a minimum desired temperature, rather than a specific range. So, for example, a user may define a target set point of 19°C, in order to keep the temperature in the building (or a zone of the building) at or above 19°C.

All or a subset of the above factors may be taken into account when determining how to control the hybrid system. A balance must be achieved between meeting user demands for satisfying the temperature targets within the property, while also maintaining provision of power to all consumers on the grid within the supply constraints, and ensuring grid stability.

A basic method of controlling a hybrid system would be to determine which system to operate (e.g. heat pump or boiler) based on the current external temperature of the property, applying an associated threshold value. In this way, a heat pump may be operated when the temperature is relatively warmer (i.e. in excess of the threshold) and the boiler may be operated when the temperature is relatively cooler (i.e. below the threshold), for example. This leads to inefficient operation, as future predictions of heat requirements are not taken into account. It has been found to be beneficial instead to predict the heating demand of a property, so as to improve the determination of opportunities for using relatively slow-heating but efficient heat pump operation, as opposed to relying on relatively high-temperature, highcarbon, boiler operation to meet occasional higher temperature targets.

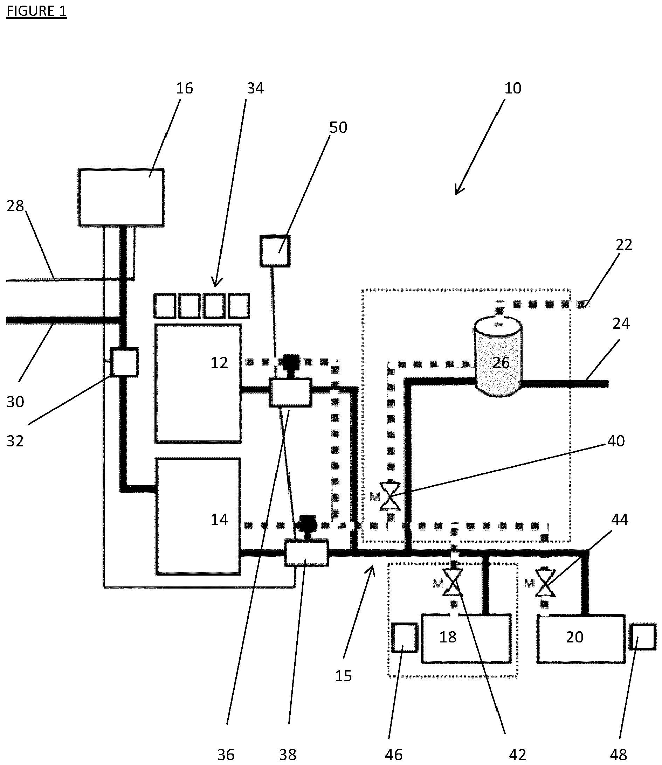

With reference to Figure 1, we describe a temperature management system 10 which includes a first heating system 12 (in this case providing a fuel-burning device such as a boiler; for example, a gas, oil or LPG boiler) and a second heating system 14 (in this case a heat pump). Typically, each heating system 12, 14 is linked to a delivery system 15 (typically a heat delivery system such as a set of radiators or underfloor heating, for example), so that operation of the respective heating systems 12, 14 results in heat (or cooling, in the case of an air conditioning system) being delivered to the property or to a zone within the property via the delivery system 15. In embodiments, and as described below, both heating systems 12, 14 deliver heat via a shared delivery system 15. In alternative embodiments each may deliver heat / cooling via its own respective delivery system. As mentioned above, each of the first and second heating systems 12, 14 is for providing central heating at the property.

Each heating system 12, 14 provides a control interface for operating its respective heat source (e.g. the heat pump or boiler). The temperature management system 10 also includes a controller 16 operable to control operation of the first and second heating systems 12, 14, via their respective control interfaces. In this way, the temperature management system 10 is operable to manage the temperature at the property in a way that maximises efficiency, and minimises deviations from the temperature targets over a given control period. The interaction between the controller 16 via the respective control interfaces may be over a wireless connection such as a WiFi network within a property, but may be provided via a wired LAN within the property, or via direct wired connections between the respective devices or by any other suitable form of communication.

In embodiments of the technology, the controller 16 (or at least a portion of the controller) is located remote from the property and may for example be hosted at a server, or provided via a cloud-based interface. In such embodiments, the communication between the controller 16 and the first and second heating systems 12, 14 may be provided over an internet connection, for example.

While the temperature management system 10 is described in terms of the first heating system 12 being a boiler, it should be understood that other forms of heating system - including air conditioning systems, and other heating and/or cooling systems, are envisaged. Herein, for simplicity, the term 'boiler' will be used in reference to this first heating system 12, and the term 'heat pump' will be used in reference to the second heating system 14. In the examples set out, the heat pump may be an air heat pump, but it should be understood that the invention is also applicable to other types of heat pump, and the term is construed to cover any suitable type.

In embodiments of the technology, the temperature management system 10 takes into account a schedule of set point temperatures defined over a control period (such as temperature targets associated with portions of the control period, as input by a user). These set point temperatures and timings are referred to as temperature targets, as they impose target conditions on the temperature management system 10 associated with the property. The control period may conveniently be of 24 hours' duration, each portion being of 15 minutes' duration so that the period is constituted by 96 consecutive portions. It should be understood that other divisions of the control period may be used, such as 10 minutes, 20 minutes, 30 minutes, or any other suitable length of period. The temperature targets may be target minimum temperature levels to be reached.

The controller 16 operates the system in a manner that aims to maintain conditions within the property in accordance with these temperature targets, so as to manage room temperatures in accordance with the schedule. In doing so, the controller seeks a balance between the effects of departures from that schedule (i.e. where the temperature targets are not met) and the negative effects associated with increased use of electricity (or fuel) over certain periods. These negative effects may include contribution to surges in demand for electricity at grid level (or at a local substation level) at peak times, potentially resulting in power shortages, or using electricity at a time when generation from renewable sources is low, as opposed to times where there maybe excess supply to the grid). By balancing user requirements at a property, against broader grid concerns around electricity usage during certain time periods, the temperature management system 10 contributes to more efficient use of energy both at the property and on a wider grid level. In this way, energy may be used more efficiently throughout an energy grid to achieve performance that satisfies the conditions required by users of the grid as closely as possible.

The example illustrated in Figure 1 represents an installation within a property. The property in this example includes two zonal areas 18, 20, and a delivery system 15 which includes a hot water feed 22 and a cold water feed 24, for circulating water around the property to and from the first heating system 12 (comprising a boiler) and the second heating system 14 (comprising a heat pump). In this example the property provides a hot water storage tank 26, and in each of the zonal heating areas 18, 20 the delivery system 15 provides heat transfer apparatus for heating the rooms, such as radiators. Motorised valves 40, 42, 44 are preferably provided between the heat sources (i.e. the boiler and or heat pump) and the radiators and/or hot water storage tank 26, to control the temperature of the water delivered to those systems.

In other embodiments of the temperature management system 10, the first and second heating systems 12, 14 (e.g. a boiler and heat pump) may be provided within a single physical unit. The two systems may be provided within a single compact unit that is roughly the size of a traditional boiler installation, for example.

In embodiments, the first and second heating systems 12, 14 may be plumbed in series, rather than being plumbed in parallel as shown in Figure 1. The first and second heating systems 12, 14 may be operable simultaneously.

The first heating system 12 may comprise an 'original' boiler installed at the property, and the second heating system 14 may comprise a heat pump that has been newly installed to the property, to operate alongside the boiler. The system 10 may further comprise one or more additional control devices 34 (such as Z-wave HVAC units, for example), to enable remote control of the boiler for providing space heating and/or hot water to water outlets. In embodiments of the technology, the second heating system 14 comprises a heat pump control unit 50, operable to control operation of the heat pump. The heat pump control unit 50 preferably also communicates usage and performance data (for example, confirmation of operation, any error codes generated, status information, etc.) to the controller 16.

It should be understood that in such a system as that described in this example, the boiler - which reacts rapidly to demand - may be used for providing hot water for the purpose of the water supply to tap outlets, for example, at the property. In embodiments of the technology, where a water storage cylinder is used to provide hot water to a property, heating systems other than a boiler may be used in heating the water within the storage cylinder. So, while a boiler may be used for all hot water heating in some embodiments, in other embodiments a heat pump (or other type of heating system) may be used in addition to or instead of the boiler. In an embodiment of the described technology, a first one of the heating systems (e.g., a heat pump) may be used to heat hot water within a water storage tank to a certain level, and above that level a second one of the heating systems (e.g., a boiler) may be used to achieve a higher temperature within the hot water tank.

In the context of the described technology, the controller 16 effectively determines which of the first and second heating systems 12, 14 is used for providing central heating within the property (i.e. the first and second heating systems 12, 14 in the context described herein are both suitable for providing central heating at a property).

In other embodiments, the controller 16 determines which of the first and second heating systems 12, 14 is used for providing hot water heating (in addition to or instead of determining the same for providing central heating) within the property (i.e. the first and second heating systems 12, 14 in this context are both suitable for providing hot water at a property).

In broad terms, the controller 16 accesses (either stored in memory or accessed from a storage device which may be located either locally or remotely) a first heating model associated with the first heating system 12, and a second heating model associated with a second heating system 14. The first and second heating models are different to one another, relating to the performance of two different heating systems. Each model associates the amount of energy or fuel used by the respective heating system with a respective effect on a temperature of the property.

The controller 16 effectively determines a control strategy for controlling the two heating systems over a control period, using the heating models, and subsequently controls operation of the heating systems according to the determined control strategy. Where the controller 16 is provided locally to the heating systems 12, 14, that may involve signalling using control signals via WiFi or an ethernet connection for example.

Where the controller 16 is disposed remotely, such as on a cloud server, the control may be provided via data sent over the internet to the first and second heating systems 12, 14 (either directly, or via a local device located at the property, itself communicatively connected to the two heating systems). In embodiments in which the controller 16 is remote from the property, we mean that at least a portion of the functionality of the controller 16 is provided remotely. For example, it may be the case that a device is provided at the property for communicating with or controlling the first and/or second heating systems 12, 14, but that the device is communicatively linked to a further remote device (a server for example) that is configured to determine an appropriate control strategy based on the first and second heating models. In this way, the controller 16 is effectively formed of a local device and a remote device acting together to control the temperature management system 10.

Preferably the controller 16 is a smart controller, connected to and controllable via the internet and/or via a local area network (either wired or wireless) - this data connection being illustrated at 28. The controller 16 provides a hub for a user to interact with the temperature management system 10, to provide settings (temperature targets) for temperatures to be achieved within the property and indications of other user preferences.

For example, a user may set a preference for the temperature management system 10 to operate so as to achieve a set point temperature by the start of a portion of the control period associated with that set point (i.e. to operate in advance of the time set for a certain temperature to be achieved), or alternatively for the system to operate to achieve that temperature only once the time associated with that set point has arrived (i.e. to start heating towards that temperature once the control period begins), for example.

In embodiments, the controller 16 is communicatively connected to heat meters 36, 38 associated with the first and second heating systems 12, 14, respectively.; This provides the controller 16 with information about the operation of the heating systems 12, 14. For example, energy data such as fuel or electricity usage data may relayed to the controller 16, in addition to data concerning the temperature of water output by the systems, for example. In addition, the controller 16 may be connected to an electrical meter 32 (such as a suitable SmartRail power meter) to receive data regarding the usage of electricity by one or more components of the system 10 - this applies particularly to the heat pump, but other devices may also be monitored in this way.

Thermostats 46, 48 providing temperature sensors are located in each zonal area 18, 20, to determine the current temperatures in those zones. The temperature data is provided to the controller 16, which in turns operates the first and second heating systems 12, 14 accordingly so as to manage the temperature within the property, in accordance with the temperature targets and other system parameters.

This temperature management system 10 and methods described seek to achieve the most effective use of energy to maintain a property (or one or more rooms of a property) at a comfortable temperature. The controller 16 takes into account the effect of an energy input in a given portion of the control period on the room temperature in that portion of the period and also in subsequent portions of the period. In embodiments the controller 16 may be preprogrammed with a defined relationship between the energy supplied to the systems in a portion of the control period and the predicted temperature of the property (or zones within the property) during that and subsequent portions of the control period stored in the memory. In embodiments, the controller 16 is arranged for the user to define the temperature targets by entering the set point temperature schedule via a user interface at the controller, or via a user interface provided via an associated control application on a mobile device, for example, or from an alternative input source.

The controller 16 provides at least: a data processor arrangement 60, and a communication interface 64 for receiving at least an input 64 of a signal indicative of a current temperature in the property, or in a zone of the property (from one or more thermometers/thermostats 46, 48 associated with the property, for example), and for sending control signals to the boiler (or alternative heating system, as discussed) and to the heat pump. The controller 16 is also communicatively coupled to a memory device 62 for storing system parameters such as the first and second heating models.

In embodiments of the technology, the controller 16 itself provides a memory device (and/or a data storage device 66) which stores the system parameters. Alternatively, the controller 16 is operable to connect to and retrieve system parameters from a remote source (which may be hosted on a remote server and/or located in the cloud, for example), via the or a further communication interface 64, 68.

The controller 16 provides at least one communication interface 64, 68 via which the controller 16 sends data to and receives data from devices operating within the system. For example, the controller 16 communicates to the first and second heating systems 12, 14, to the heat pump control unit 50, and in embodiments, to motor-operated valves within the system controlling the flow of water through the pipes within the property. Further, the controller 16 receives communications of data, and operational updates, from sensors such as the thermostats 46, 48, readings from heat meters associated with the heat pump and boiler, respectively, and any other sensors or control devices within the system. In preferred embodiments, and as described, the controller 16 is also accessible via an interface which may be provided by the device itself, or via an online portal or application interface to enable a user to interact with the system via a smart phone or web browser, for example.

In broad terms, the system parameters include: temperature targets relating to the temperature requirements of the occupants of the property; first and second heating models relating to the performance of the first and second heating systems 12, 14 in heating the property; penalty parameters relating to the detriment that the controller associates with operating each of the heating systems 12, 14, which may include a penalty ratio indicating the relative penalties associated with the first and second heating systems 12, 14; a tolerance parameter relating to the detriment associated with failure to meet the temperature targets; and an operating criterion imposing one or more rules on the controller 16 for determining a control strategy for controlling the first and second heating systems 12, 14 over the duration of the control period.

The system parameters include a schedule of set point temperatures defining temperature targets over one or more time periods, defined within the control period. These constraints are typically user-defined, commonly provided as a series of temperature 'set points' to be achieved and/or maintained during predefined time periods (as is common in typical thermostat-based central heating systems, for example). In the embodiments described, the temperature targets define minimum temperatures to be achieved; this is explained in more detail below.

The first and second heating models are defined by a set of heat management parameters, which effectively each define a function associating energy and/or fuel supplied to or used by the system in portions of the control period with the predicted temperature of the room during that portion and subsequent portions of the control period based on known heating or cooling characteristics associated with the property (or a room within the property, for example). The first and second heating models provide heat management parameters associated with the use of the first heating system (the boiler, for example), and second heat management parameters associated with use of the second heating system (e.g. the heat pump). Effectively, the heat management parameters provide a performance model associating input energy or fuel, and resulting heat variation felt within the property (or a portion or zone of the property). For example, the parameters may define a room heating rate if the radiators in the room are at 50°C and it is 10°C outside. The parameters may also include information relating specifically to the heating systems - e.g. a maximum thermal output power of each of the heat pump and boiler). The two heating models differ, since the two different heating systems will interact with the property in different ways.

For example, a gas-burning boiler heating hot water circulated around the property will create a different heating profile to a heat pump-based systems, given the differing properties of the two devices. The rate at which the property can be heated, and the corresponding use of energy / electricity / gas, varies between the two systems. Of course, in achieving those different heating profiles, different amounts of energy / electricity / gas are used and at differing rates. The use of the first and second heating models therefore takes these different heating profiles, and use of resources, into account.

The system parameters further include one or more penalty parameters relating to the detrimental effect of using electricity, or fuel supplying the boiler, within a given period. The penalty parameters may differ over different portions of the control period, or may be constant over the period. The penalty parameters may differ depending on the type of the heating system - i.e. a different penalty may be assigned for using the electricity-intensive heat pump during a period, than is assigned for using gas boiler during the same period.

The penalty parameter(s) may be stored in association within each heating system, separately, providing indications of the detriment associated with the source of energy associated with that system (i.e. electricity, gas, or the like). For example, penalty parameters associated with the heat pump relate to the detriment of using electricity, and equivalently penalty parameters associated with the use of the fuel associated with the boiler implemented heating system (e.g. gas).

Alternatively, rather than recording separate penalty parameters for each heating system, the penalty parameters may include a penalty ratio, associating the relative detriment of using electricity to operate the heat pump against that of using fuel to operate the boiler. The penalty parameters may include multiple values / ratios associated with multiple portions of the control period. For example, a penalty ratio of 2:1 (which may be recorded simply as the parameter value '2') would indicate that there is twice the detrimental impact associated with using electricity to run the heat pump at during the associated portion of the control period relative to that of using gas to fire the boiler. In another instance, the penalty ratio may instead be 2:3 (or '0.67'), which indicates preferable conditions for using electricity to run the heat pump instead of using the boiler.

As mentioned above, the penalty parameter may vary over the course of the control period to take into account variations in the detrimental effect of consuming energy, or fuel, at different times. This happens in the case of a smart grid electrical energy supply system, where the supply within the grid is known to vary, such that the smart system aims to restrict energy usage where possible during 'peak' times. If demand within the grid rises above a certain level, issues with a demand/supply imbalance may occur, as insufficient energy may be available.

Further, the detriment to using energy may be very low where demand at a grid level is low - for example when renewable resources are achieving a high output. At such times it may be advantageous to the grid for energy to be consumed, and so a very low (or even negative) value may be associated with the penalty parameter at those times, to encourage the use of energy.

The system parameters further include a tolerance parameter, representative of the acceptability of variations of the actual or predicted temperature of the room from the set point schedule. For example, the controller is configured to determine the degree to which the temperature may vary from - or may be predicted to vary from - the desired set point temperature target, in order to avoid incurring an excessive penalty associated with use of the boiler or heat pump, according to whichever is operational at that time (or is being considered to be operational if relating to a future period).

In broad terms, the controller 16 provides a control module that is configured to determine a control strategy, defining an allocation of heating resources that achieves efficient control of the heating systems 12, 14. In other words the control strategy defines a control schedule, setting out which heating system 12, 14 to operate at any point in time, in order to achieve the desired performance. The controller 16 subsequently controls the operation of the first and second heating systems 12, 14, via the control outputs of the controller.

The control strategy is determined in a way that results in the parameter values including at least the tolerance parameter value and the penalty parameter value satisfying an operating criterion. For each portion of the control period, the controller determines whether to operate the first or the second heating system 12, 14, and the energy to be supplied to that respective heating system in order for the parameters best to satisfy that operating criterion.

In embodiments of the technology, the operating criterion is applied to the sum of parameter values, including at least the tolerance parameter and penalty parameter(s). In other words, the controller 16 seeks to minimise the combined detriment incurred by the penalty value assigned to the use of electricity or fuel, respectively, during that period, and the contribution of the tolerance parameter associated with failure to meet the temperature target during that portion of the control period. In embodiments of the technology, the tolerance parameter contribution to the penalty is applied asymmetrically, so that a temperature variation from a target temperature is only penalised if the temperature achieved falls below the target, and no penalty is incurred if the temperature exceeds the target. Note that typically the penalty parameters associated with using one or both of the first and second heating systems effectively deter the system from over-using the heating systems, and so achieving a temperature above the target is penalised in that way by incurring an increased penalty derived from those penalty parameters.

In embodiments, the sum is of the parameter values over the whole control period. In this way, the controller determines the expected sum of the tolerance and penalty parameters associated with various combinations of use of the either first or second heating systems during each respective portion of the control period. In other words, based on the use of a particular one of the heating systems 12, 14 in a period, the sum of the associated penalty parameter for use of the fuel and/or electricity respectively, and the tolerance parameter for any forecast deviation from the temperature targets imposed via the set point schedule.

In embodiments, the contribution (to the sum) of the penalty parameter associated with the heating system allocated for use during a portion of the control period is scaled by the amount of electricity / fuel (respectively) determined to be required during operation of that heating system over the portion of the period (which is proportional to the heat energy required). In embodiments, the contribution to the sum of the penalty parameter may be in proportion to the amount of electricity/ fuel required above a threshold value of acceptable use. In other words the penalty parameter may be applied to fuel or power usage above a predefined limit during the portion of the control period. In embodiments, the penalty parameter may be represented by a function associating a detriment (or 'cost') to the amount of excess or under-use of fuel or power within a given control period or portion of a control period, which may vary over time. Therefore, the penalty parameter can be viewed as a penalty function, mapping the detriment penalties associated with use of energy or fuel over time. The function is typically a discrete function over time intervals, for example.

In a similar manner, the contribution (to the sum) of the tolerance parameter is scaled by the offset between the temperature achieved (or expected to be achieved, if the portion relates to a future time period) during that portion of the control period based on the energy consumption, or planned consumption, and the set point temperature values. Typically, the tolerance parameter contribution comprises the product of the stored tolerance value and the difference or offset between the set point temperature (i.e. as defined by the temperature targets) and the actual or predicted temperature at the time. Taking this approach provides a linear scaling of the penalty imposed for missing a target set point, in proportion to the divergence from that set point. The tolerance parameter value can thus be considered to represent a "discomfort cost" to the property occupants.

The term 'divergence from a set point' is used herein, but it should be understood that in some embodiments of the technology an offset from the target temperature may be deemed to be a divergence that contributes to the tolerance parameter only if the temperature achieved falls below the set point temperature value. In other words, achieving a temperature above the target results in no contribution, whereas falling below the target results in incurring a tolerance parameter contribution. In other embodiments, an offset from the target temperature may be deemed to be a divergence whether above or below the target temperature. In some embodiments, a divergence above the target set point may carry a different penalty to a corresponding divergence below the target set point temperature.

In embodiments, the stored tolerance parameters may vary over the course of a day, during different control periods, or even during a control period. As examples, the tolerance parameter may vary to reflect differing levels of occupancy of a property or room, or the anticipated activity level of an occupant. Thus, the tolerance parameter might be lower at night, when occupants are likely to be in bed and sleeping, and so have less awareness of and sensitivity to temperature divergence from the target set point temperature. For example, a divergence of 1°C from a stored set point during the night time may be of less concern than a divergence of 1°C during an evening when the occupants are at home and awake. Similarly, a divergence from a set point of 1°C may carry little or no discomfort cost to the property owner at a time when they are out of the house during the day, while at work, for example. Furthermore, a range of values around each target set point may provide acceptable values which incur no penalty. This indication of tolerance to divergences in temperature from the set points may apply to temperatures outside the acceptable range around the target. In that case, the tolerance parameter is set in such a way that no penalty is incurred for small deviations within the accepted range.

The tolerance parameter should be viewed as a tolerance function, mapping the temperature divergence (which may differ above and/or below the target store point) with an associated detriment cost, which may vary as a function of time. The function is typically a discrete function over time intervals.

It should be understood that scaling of the penalty parameter and tolerance parameter contributions may each be linear, defined by a predetermined variable, or alternatively by a quadratic function, or may be defined by any suitable function. The function may be a piecewise function. Suitable functions are known in the art (as described in WO2013/171448, for example). Different scaling functions may be applied to the penalty parameter and to the tolerance parameter.

In embodiments of the technology, the applied operating criterion is that the sum of the tolerance parameter and penalty parameter is substantially minimised. The sum may, for example, be substantially at a minimum at the turning point of the function defining the minimum. In embodiments, using an iterative process such as the gradient descent method or Newton-Raphson method, an approximate minimum can be determined. Other suitable functions are known in the art for optimising parameters in the manner desired. For example, WO2013/171448 sets out methods including details of the gradient descent method, Newton-Raphson method, linear programming, and the primal-dual barrier function method, in addition to the application of such methods to both a boiler-based heating system and to a heat pump system.

In embodiments, the controller is operable to determine a schedule of energy to be supplied by the temperature management system 10, using a selected one of the heating systems (i.e. the boiler or heat pump), by means of the iterative process. The controller may determine a schedule in which different ones of the first and second heating systems are used in different portions of the control period.

In embodiments of the technology, the controller is operable to update the calculations associated with each of the portions of the control period during the course of the control period, to enable divergence of the temperatures within the property during current and/or previous portions of the control period to be taken into account.

In embodiments of the technology, the system parameters include details (such as models) of the heat performance of the heating systems. For example, the energy supplied by the heating systems may vary, and/or the efficiency of the system may vary, in relation to the environmental temperature. For example, the second heating system being a heat pump, means that the temperature difference between the heat source and the heat sink of the pump will have an impact on its efficiency and on the energy generated. This means that more electrical energy may be required to operate the system in colder temperatures, to provide an equivalent thermal output, than would have been the case at a warmer environmental temperature. This can be taken into account during the determinations made by the controller.

So in other words, the system parameters may include details (such as models) of the heat capacity and thermal transfer properties of the first and second heating systems, the heat capacity and thermal transfer properties of the thermal mass of the property (which may include those details for individual rooms or zones within the property); and the thermal transfer properties between the property (and/or rooms / zones) and the external environment. Preferably, the properties linked to the external environment include the forecasted temperatures of the external environment over the control period.

The operating criterion against which the controller determines its control schedule, setting out the allocation of heating resources to be applied, may be that the sum total of the detriment (i.e. of the tolerance parameter and penalty parameters) is minimised. In this way a user or system operator may specify an upper limit on the penalty to be incurred (i.e. the sum total of the scaled penalty parameter over the control period) in combination with the detriment attributed to the temperatures achieved deviating from the targets set by the set point scheduled, according to the tolerance parameter.

The penalty parameters and tolerance parameters may be set in such a way to bias the control in a particular way - i.e. to ensure that temperature targets are achieved on one hand, no matter the detriment penalty incurred by expending energy in a way that might be considered disadvantageous, or on the other hand rigidly enforcing an economical use of the heating sources so as to achieve the most efficient energy use despite a divergence in temperatures from the targets. Generally, a preferred approach is somewhere in between, balancing the efficiency against the comfort achieved by approximating the desired temperature most of the time.

In embodiments, the operating criterion may provide an upper bound on the energy to be consumed at the property, within a period, for example. The operating criterion may provide an upper bound on the sum total of the scaled penalty parameter contributions associated with each of the two energy management systems. In response, the controller determines a control schedule which achieves this within the upper bound on penalty parameter value, while minimising discomfort to the occupants according to the scaled tolerance parameter.

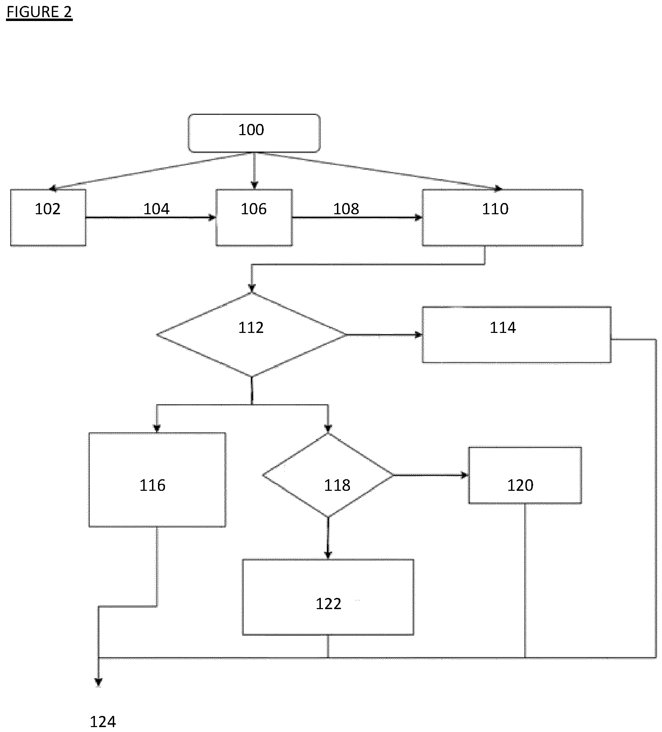

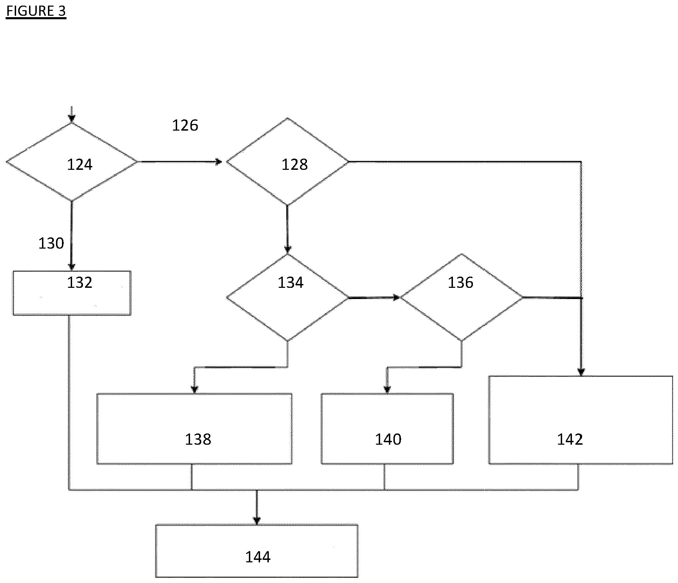

As an example, and with reference to Figures 2 and 3, in embodiments the temperature management system 10 operates as follows. Again, in the context of this example, we refer to the first heating system 12 as a boiler, and the second heating system 14 simply as a heat pump; it should be understood that alternatives to a boiler are envisaged as previously explained.

Sensor readings are generated 100 from thermometers located at the property (e.g. in the first and second zonal areas 18, 20); the thermometers may form part of thermostats 46, 48 located in those zones. In addition, in embodiments, sensors associated with the first and second heating systems 12, 14 may provide data, relating to the current performance and/or current output of those systems. The sensors readings are communicated to the controller 16.

The controller 16 performs steps associated with the temperature data received, as follows. It should be understood that the following steps may be carried out using data stored by the controller 16 locally, using its memory device 62 and data processor arrangement 60; alternatively, processing and/or storage of data and/or system parameters may be performed remote from the controller 16, with data being communicated between the controller 16 and a further remote device (such as a remote server). In other embodiments, as described above, the controller 16 itself may be hosted remotely.
1) The heat management parameters are updated. In other words, the thermal model of the system is updated as the controller processes the acquired sensor data 102 to improve its understanding of the performance of the heating systems 12, 14 within the property, resulting in the thermal model of the property being updated 104. This process of learning from the acquired data in order to update stored heat management parameters (as described in WO2015071654A1, for example), including the stored thermal models, may be performed at predefined intervals - i.e. once daily, or at a shorter or longer interval, as appropriate.
2) An optimiser module forecasts the system status 106, at a given time interval (which, in embodiments, is at 15 minute intervals - but a longer or shorter interval may be used as appropriate). This optimisation takes account of the sensor data received, and the determination of predicted performance of the system over future portions of the control period, and the temperatures likely to be achieved is based on the heat management parameters.

Effectively, the optimiser module explores different strategies for operating each of the two heating systems 12,14 (i.e. modelling use of one, the other, or both being used over upcoming time intervals). In embodiments, this includes simultaneous use of the two heating systems where a suitable system layout is employed.

The optimiser module determines, based on the relative outcomes of the control strategies modelled (i.e. for operation of the first and second heating systems 12, 14 over future time intervals), an optimal strategy in order to meet the operating criterion. This optimal strategy is referred to as a control strategy herein. In other words, the control strategy is determined based on the parameter values including at least the tolerance parameter value and the penalty parameter value satisfying the operating criterion. In this way, the optimiser module output specifies a control strategy indicating time intervals during which the first and second heating systems 12, 14 should be operational, and the level at which they should be operating. In addition, based on the modelled data and the determined control strategy, predictions of the energy usage and associated future temperatures are determined 108.

3) A control module receives data from the optimiser module indicating the control strategy 110. This may occur at regular intervals (e.g. once per minute, or once every five minutes, for example; or may occur at shorter or longer intervals). The control strategy outlines operation of the first and second heating systems 12, 14 according to a control schedule. The control module subsequently determines 110 specific steps required to implement that control strategy according to the current status of the first and second heating systems, as outlined below.

A determination is made 112 as to whether both heating systems 12, 14 (i.e. both the heat pump and boiler) are operational (i.e. available for use). If not, in embodiments, a simplified control process is adopted 114 to use the single available heating system 12, 14. In other embodiments, the optimiser module may be used to make a fresh determination of a control strategy without the use of the unavailable heating system 12, 14. This allows the system to continue to operate in a 'smart' way, by continuing to optimise its performance given the available resources.

Otherwise, if both are operational, a determination is made 116, for each zone, as to whether the boiler is required based on output from the optimiser (i.e. the forecasts of energy use and temperatures). In addition, a determination is made 118 as to whether the boiler has run recently - if so, the heat pump requirement is 'off' for all zones, 120, since the boiler has already been in use. In that scenario, the water temperature may be higher than the heat pump can handle (as typically a boiler operates at higher temperatures). Otherwise, a further determination is made 122 as to whether the heat pump is required, as well as assessing a target water temperature for each zone, based again on the output of the optimiser.

Following the above steps, at 124, the process diverges depending on the plumbing configuration of the heat pump. In a property operating only a single zone for temperature control, the heat pump may be configured to provide heat directly to that single zone 130. In that case, on/off control signals are sent 132 by the controller 16 to the boiler and the heat pump to control them as required to achieve the determined control strategy.

Otherwise 126 if the output of the heat pump (and its input to the space heating zone or zones) is controlled by a valve arrangement 40, 42, 44, then a determination is made 128 as to whether a hot water heating cycle is in progress. The valve arrangement is disposed between the heating systems 12, 14 and the delivery system 15, and the controller 16 is operable to control the valve arrangement so as to direct heat as required within the delivery system 15. If hot water heating is in progress 142, the heat pump is turned off, the boiler is enabled, and the zone valves are opened according to requirements of the boiler's configuration. In other words, where hot water heating is in progress, only the boiler is used - the heat pump does not provide an efficient primary mechanism to heat water since it does not provide a sufficiently rapid response.

If a hot water cycle is not in progress, a determination is made 138 as to whether any zone requires the heat pump to be on; if so, the boiler is turned off, zone valves are opened according to the heat pump requirement. A delay of a few minutes (preferably at least one minute, further preferably between 1 and 10 minutes; and further preferably still between 3 and 5 minutes) is provided, following which the heat pump is turned on.

If no zone requires the heat pump to be on, a determination is made 136 as to whether any zone requires the boiler to be on. If so, step 142 is carried out: the heat pump is turned off, the boiler is enabled, and the zone valves are opened according to requirements of the boiler's configuration. Otherwise, if not, the boiler is turned off, the heat pump is turned off, and after a delay (of preferably 30 seconds to 5 minutes, and further preferably between 1 minute and 3 minutes), the zone valves are shut.

If at this stage 144 the heat pump is on, the controller 16 communicates to the heat pump (and or to the heat pump control unit 50) the target water temperature of the active zone (or the highest target water temperature of any of the active zones), so that the heat pump (or its heat pump control unit 50) is operated to achieve a water output temperature satisfying that requirement.

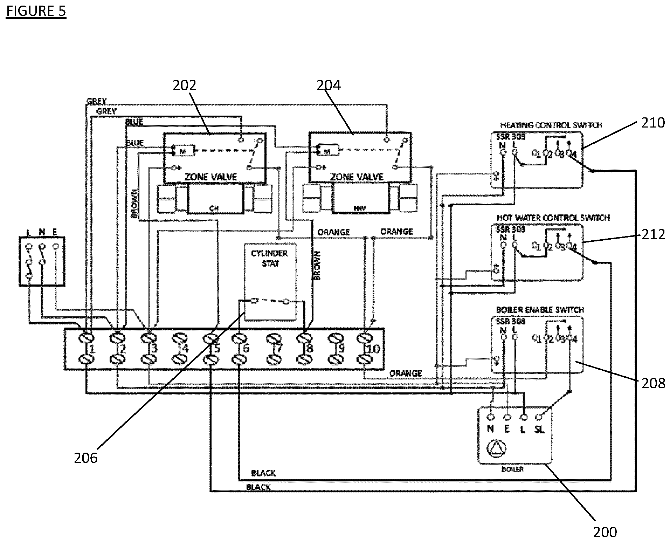

With reference to Figure 5 of the drawings, exemplary operation of a temperature management system 10 with respect to the hardware components operating a boiler-based heating system, is now described.

In a typical hot water heating system within a property, a boiler 200 is activated in response to a signal received from either a heating control switch 210 (when the central heating within the building is activated) or from a hot water control switch 212 (when there is a demand for hot water to be provided to a tap, for example). Before the boiler 200 is activated, a corresponding zone valve actuator 202, 204 is used to open a respective zone valve, and subsequently to allow water to flow through the respective portion of the pipework within the building, associated with the heating system or hot water system. The zone valve actuators 202, 204 are referred to in this context, below, simply as 'zone valves'.

Prior to operating the zone valve 204 for the hot water system, a hot water cylinder thermostat 206 is used to determine whether the temperature within the hot water tank is already sufficiently hot (i.e. at or above a predetermined temperature). If that is the case, there is no need to open the valve 204 or operate the boiler 200, since there is no requirement to heat the stored water. If the water is not found to be at a sufficient temperature, the zone valve 204 is operated.

On activation of the zone valves 202, 204, once the valves are determined to be open, the "switch live" (SL) input to the boiler is made live, and the boiler 200 operates to heat the water.

In systems according to embodiments of the present technology, a boiler enable switch 208 is installed (in series) between the outputs of the zone valves 202, 204, and the switch live input of the boiler 200. Instead of the boiler 200 being operated directly following the opening of the zone valves 202, 204, the live input is received by the boiler enable switch 208.

The boiler enable switch 208 is communicatively connected to the controller 16 (not shown). In most embodiments described, where the demand is received for hot water, the boiler enable switch 208 operates the boiler 200 in the standard way (note the alternative option, described below, either or both systems contributing to hot water heating). Where the demand is received for central heating, the controller 16 communicates to the boiler enable switch 208 whether operation of the boiler is required, based on a determination of which one of the first and second heating systems 12, 14 should be operated for central heating. In the event that the boiler 200 should be operated, the switch live input on the boiler 200 is made live. Otherwise, no action is taken to operate the boiler 200, and instead the other of the heating systems (e.g. a heat pump) is operated (via the controller, and not shown in Figure 5). This is possible since the zone valve 202 relating to the central heating system has already been opened.

By employing the boiler enable switch 208, a solution is found to the need to operate the central heating zone valve 202 without subsequently operating the boiler 200 where an alternative heating system is instead to be used in place of the boiler 200. This enables a standard safety step of checking that the zone valve 202 is open, prior to operating the heating system, by redirecting the output from the zone valve 202. This means that the same check can be used for operating either heating system 12, 14. This also means that in a temperature management system 10, in which a second heating system 14 is installed alongside an existing boiler installation, the output from the zone control valve actuators is simply rerouted to the input of the boiler enable switch 208, and the output of the boiler enable switch 208 connected to the switch live input of the boiler 200, in order to achieve this 'retro-fitting' of the system.

In an embodiment in which the controller 16 determines which of the first and second heating systems 12, 14 is used for providing hot water heating in addition to or instead of making the same determination for central heating, where a demand is received for hot water in that configuration, the controller 16 communicates to the boiler enable switch 208 whether operation of the first or second 12, 14 heating systems is required for heating the hot water.

Preferred features of embodiments of the described technology are set out in the following clauses.
1. A temperature management system for controlling a temperature at a property, the system including:
   a first heating system;
   a second heating system;
   each of the first and second heating systems providing different respective heating mechanisms; and
   a controller operable to control operation of the first and second heating systems.
2. The temperature management system of clause 1, wherein the first heating system comprises a boiler and/or the second heating system is a heat pump.
3. The temperature management system of clause 1 or clause 2, wherein the first and second heating systems are both for providing central heating at the property, and the controller is operable to control operation of a central heating system of the property using the first and second heating systems.
4. The temperature management system of any preceding clause, wherein the first and second heating systems are both for providing hot water heating at the property, and the controller is operable to control operation of a hot water heating system of the property using the first and second heating systems.
5. The temperature management system of either preceding clause, wherein the controller provides:
   a data processor arrangement,
   a communication interface for receiving a signal indicative of a temperature in the property from a sensor associated with the property and for sending control signals to the first and second heating systems so as to control the operation of those systems.
6. The temperature management system of any preceding clause, wherein the first heating system and second heating system are associated with a shared delivery system for heating the property.
7. The temperature management system of any preceding clause, wherein the controller is communicatively coupled to a memory device for storing system parameters.
8. The temperature management system of clause 7, wherein the system parameters include:
   a tolerance parameter associating a detriment value with a divergence from a stored temperature target,
   a penalty parameter associating a detriment value to the amount of fuel or energy used by each heating system, and
   wherein the controller is operable to determine a control strategy for controlling the first and second heating systems over a control period, the determination being made based on minimising a function of the tolerance parameter and the penalty parameter.
9. The temperature management system of clause 8, wherein the tolerance parameter includes stored temperature targets providing one or more target temperatures or target temperature ranges associated with one or more portions of the control period.
10. The temperature management system of clause 8 or clause 9, wherein the detriment associated with divergence from the stored temperature targets varies over time.
11. The temperature management system of any one of clauses 6 to 10, wherein the penalty parameter associates use of fuel or energy to detriment values that vary over different portions of the control period.
12. The temperature management system of any one of clauses 8 to 11, wherein the penalty parameter associates detriment values that differ between the first and second heating systems.
13. The temperature management system of any one of clauses 8 to 12, wherein the system parameters include heat management parameters associating the amount of energy or fuel used by each of the first and second heating systems with a respective effect on the temperature of the property.
14. The temperature management system of clause 13, wherein the controller models the expected effect on temperature of using each of the first and second heating systems during a future portion of the control period, using the heat management parameters, in order to determine an expected divergence from the stored temperature targets, and expected usage of fuel / energy, in determining a control strategy.
15. The temperature management system of clause 14, wherein the controller is operable to determine a control schedule for controlling the first and second heating systems over one or more future portions of the control period.
16. The temperature management system of clause 15, wherein the determination minimising the function of the tolerance parameter and the penalty parameter is made iteratively by the controller, as the models of the expected effect on temperature of using each of the first and second heating system are updated, so as to update the control schedule.
17. The temperature management system of any one of clauses 13 to 16, wherein the heat management parameters include one or more of:
   a heat capacity and thermal transfer properties of the respective heating systems;
   a heat capacity and thermal transfer properties of the thermal mass of the property;
   thermal transfer properties between the property and an external environment;
   forecast temperatures of the external environment over the control period.
18. The temperature management system of any preceding clause, further comprising one or more sensors operable to measure a temperature associated with the property, and to communicate the temperature to the controller.
19. The temperature management system of clause 18, where depending directly or indirectly on clause 9, wherein the property is partitioned into multiple zones each having an associated sensor for measuring a temperature associated with the respective zone, and wherein the target temperatures or target temperature ranges may differ between zones.
20. A controller for a temperature management system, of the type that includes a first heating system, and a second heating system, the controller being communicatively coupled to a memory device for storing system parameters, and operable to determine a control strategy for controlling the first and second heating systems over a control period, based on the system parameters, and to control the first and second heating systems according to the control strategy.
21. The controller of clause 20, wherein the system parameters include heat management parameters associating an amount of energy or fuel used by each of the first and second heating systems with a respective effect on the temperature of the property.
22. The controller of clause 21, wherein the controller determines the expected respective effects on temperature in the property of using each of the first and second heating systems during a future portion of the control period, based on the heat management parameters.
23. The controller of clause 22, wherein the system parameters include a tolerance parameter associating a detriment value with a divergence from a stored temperature target and a penalty parameter associating a detriment value to the amount of fuel or energy used, and wherein the controller is operable to determine an expected divergence from the stored temperature targets and expected usage of fuel / energy for multiple proposed control strategies each allocating a schedule of usage of the first and second heating systems, and to select one of the proposed control strategies that minimises a function of the tolerance parameter and the penalty parameter.
24. The controller of any one of clauses 20 to 23, wherein the controller is operable to determine a control schedule for controlling the first and second heating systems over one or more future portions of the control period.
25. The controller of any one of clauses 20 to 24, wherein the first heating system provides a boiler, and wherein the controller is communicatively connected to a boiler enable switch disposed in series between an output of a zone valve control actuator, and a control input of the boiler.
26. The controller of clause 25, wherein the controller is configured, in response to receiving of an input from the zone control valve actuator indicating that a zone control valve is open, to cause the boiler enable switch to operate the boiler only where it is determined that the first heating system should be used, and not to do so where it is determined that the second heating system should instead be used.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A controller for a temperature management system for a property, of the type that includes a first heating system, and a second heating system, each of the first and second heating systems providing different respective heating mechanisms, wherein the controller is configured to:
access a first heating model associated with the first heating system, and
access a second heating model associated with a second heating system, the first heating model being different to the second heating model and each associating the amount of energy or fuel used by the respective heating system with a respective effect on a temperature of the property,
determine a control strategy for controlling the first and second heating systems over a control period, using the first and second heating models, and
control operation of the first and second heating systems according to the determined control strategy.

2. The controller of claim 1, wherein the control strategy is determined by minimising a function of:
a first detriment value determined based on a tolerance parameter associating a detriment with a divergence from a stored temperature target, and
a second detriment value determined based on a penalty parameter associating a detriment with the amount of fuel or energy used by each respective heating system.

3. The controller of any preceding claim, wherein the tolerance parameter includes stored temperature targets providing one or more target temperatures or target temperature ranges associated with one or more portions of the control period.

4. The controller of claim 3, wherein the detriment associated with divergence from the stored temperature targets varies over time.

5. The controller of any preceding claim, wherein the penalty parameter associates use of fuel or energy to detriment values that vary over different portions of the control period.

6. The controller of any preceding claim, operable to determine the respective expected effects on temperature of using each of the first and second heating systems during a future portion of the control period, in order to determine an expected divergence from the stored temperature targets associated with use of each system, and an expected usage of fuel and/or energy by each system, in determining a control strategy.

7. The controller of claim 6, wherein determining the control strategy for controlling the first and second heating systems is based at least in part on one or more of the following heat management parameters:
a heat capacity and thermal transfer properties of the respective heating systems;
a heat capacity and thermal transfer properties of the thermal mass of the property;
thermal transfer properties between the property and an external environment;
forecast temperatures of the external environment over the control period.

8. The controller of claim 6 or claim 7, operable to determine a control schedule for controlling the first and second heating systems over one or more future portions of the control period.

9. The controller of claim 8 where dependent indirectly on claim 2, wherein the determination minimising the function of the tolerance parameter and the penalty parameter is made iteratively, as the models of the expected effect on temperature of using each of the first and second heating system are updated, so as to update the control schedule.

10. The controller of any preceding claim, operable to receive data from one or more sensors associated with the property, and to control operation of the first and second heating systems by communicating control signals to the respective first and second heating systems.

11. The controller of any preceding claim, wherein the first heating system is of a type providing a boiler, and wherein the controller is configured to be communicatively connected to a boiler enable switch disposed in series between an output of a zone valve control actuator, and a control input of the boiler.

12. The controller of claim 11, wherein the controller is configured, in response to receiving of an input from the zone control valve actuator indicating that a zone control valve is open, to cause the boiler enable switch to operate the boiler only where it is determined that the first heating system should be used, and not to do so where it is determined that the second heating system should instead be used.

13. A temperature management system for controlling a temperature at a property, the system including:
a first heating system and a second heating system;
each of the first and second heating systems providing different respective heating mechanisms; and
a controller according to any one of claims 1 to 12.

14. The temperature management system of claim 13, wherein the first heating system comprises a boiler and the second heating system is a heat pump.

15. The temperature management system of claim 13 or claim 14, wherein at least a portion of the controller is located remote from the property.
